# EUROPÄISCHE PATENTANMELDUNG

(11) **EP 4 852 136 A1**
(43) Veröffentlichungstag der Anmeldung: **09.12.2026**
(21) Anmeldenummer: 26182246.4
(22) Anmeldetag: 01.06.2026
(51) Int. Cl.: H01M 10/42, H01M 10/04, H01M 10/0587

(54) **AKKUZELLE**

(30) Priorität: 06.06.2025 DE 102025122311
(71) Anmelder: PolyIC GmbH & Co. KG, 90763 Fürth (DE); LEONHARD KURZ Stiftung & Co. KG, 90763 Fürth (DE)
(72) Erfinder: ULLMANN, Andreas, 90763 Fürth (DE); HÜMPFNER, Tobias, 90763 Fürth (DE); HIEROLD, Martin, 90763 Fürth (DE); GRUBER, Mathias, 90763 Fürth (DE); MÜLLER, Julian, 90763 Fürth (DE)
(74) Vertreter: Zinsinger, Norbert

(57) **Zusammenfassung**

Die Erfindung betrifft eine Akkuzelle, insbesondere eine wiederaufladbare Akkuzelle und/oder Sekundärbatterie, einen so genannten Akkumulator mit mindestens einer Akkuzelle oder kurz "Akku", wie sie für alle Arten von Geräten, wie Smartphone, Laptop und Elektromotoren, z.B. in Elektroautos, handelsüblich sind. Durch die vorliegende Erfindung wird es erstmals möglich, den Innendruck einer Akkuzelle zu messen, wobei ein Drucksensor eingesetzt wird, der so einfach wie ein Stück Klebestreifen in die Windungen der Akkuwicklung einsetzbar ist und durch den ein Auslesen der Druckänderung in der Akkuzelle in Echtzeit über das Batterie-Management-System möglich ist.

## Beschreibung

Die Erfindung betrifft eine Akkuzelle, insbesondere eine wiederaufladbare Akkuzelle und/oder Sekundärbatterie, einen so genannten Akkumulator mit mindestens einer Akkuzelle oder kurz "Akku", wie sie für alle Arten von Geräten, wie Smartphone, Laptop und Elektromotoren, z.B. in Elektroautos, handelsüblich sind.

Typischerweise umfasst ein Akku eine oder mehrere Akku-zelle(n) und/oder Sekundärbatterien, die jeweils zwei Elektroden, Elektrolyt, Separator und Gehäuse haben. Bei den zwei Elektroden handelt es sich um eine Kathode und eine Anode.

Die positive Elektrode, die Kathode, ist beispielsweise aus einem oder mehreren Metalloxiden wie bei der Lithium-Ionen-Batterie aus einem Lithium-haltigen Metall-Mischoxid wie Lithiumkobaltoxid (LiCoO2) und/oder Lithiumeisenphosphat (LiFePO4) und/oder einem Nickelhaltigen Metall-Mischoxid wie Nickel-Mangan-Kobalt-Oxid, z.B. in der so genannte "NMC" - Batterie. Die Gegenelektrode ist die negative Elektrode oder Anode, die beispielsweise aus Metall, Kohlenstoff, Graphit und/oder Silizium, aber auch einfach durch das metallische Gehäuse realisiert sein kann.

Bei manchen Akkutypen oder speziellen Bauformen der Akkuzelle, beispielsweise prismatische Zellen und/oder Pouch-Zellen, ist das Gehäuse **elektrisch isoliert,** um Kurzschlüsse zu vermeiden.

Zwischen den beiden gegenpoligen Elektroden befindet sich der Elektrolyt, das Medium durch das die Ladungsträger wie beispielsweise Lithium-Ionen von einer Elektrode durch den Separator zur anderen fließen.

In den meisten Fällen enthält der Elektrolyt eine leitfähige Flüssigkeit, Gel und/oder festes Material, das Ionen gut leitet, aber keine Elektronen. Während des Lade- und Entladevorgangs fließen die Ionen durch den Elektrolyten. Ein typischer Elektrolyt ist beispielsweise eine Flüssigkeit, wie eine Lösung von Lithiumsalzen in organischen Lösungsmitteln.

Während des Ladens und Entladens wandern Lithium-Ionen zwischen der positiven und negativen Elektrode. Dabei findet eine reversible chemische Reaktion statt, die die Speicherung und Freisetzung der elektrischen Energie ermöglicht. Dies hat, vor allem bei hohen Leistungsdichten wie Schnell-Auf- oder Entladung auch thermische Auswirkungen, so dass das Innere einer Akkuzelle sich erhitzt.

Die beiden Elektroden sind in der Regel durch einen Separator voneinander getrennt. Beispielsweise ist der Separator eine dünne, poröse Membran, die die Elektroden voneinander trennt. Der Separator verhindert Kurzschlüsse, lässt aber den Transport der Ladungsträger, wie beispielsweise den Ionentransport, zu.

Schließlich umfasst eine Akkuzelle noch ein Gehäuse. Beispielsweise ein Metall- oder Kunststoffgehäuse. Dadurch werden die empfindlichen Komponenten der Batterie geschützt und über das Gehäuse und/oder die hier mit vorgesehenen Pole erfolgt auch die Kontaktierung.

Beim Zusammenbau eines Akkus gibt es verschiedene Varianten, insbesondere Blockzellen wie Rundzellen, zylindrische, flache und prismatische Zellen. Alle Ausführungen umfassen gewickelte und/oder gestapelte Elektroden und Separatoren. Die Pole sind beispielsweise bei Rundzellen mittig in der Wicklung angeordnet. Zur Herstellung eines Stapels oder einer Wicklung werden flache Elektroden und Separatoren eingesetzt. So werden typischerweise die Elektroden aus den jeweiligen Materialien hergestellt und in dünne Schichten geschnitten und/oder gewalzt. Die Elektroden und/oder Separator(en) werden flächig produziert, wobei die Elektroden mit speziellen Elektrolyt-Materialien beschichtet und anschließend getrocknet werden, um die gewünschte Leitfähigkeit und Stabilität zu gewährleisten. Die so hergestellten Elektroden-Folien werden geschichtet, gewickelt, gestapelt und/oder als Stapel gewickelt und in das Gehäuse eingesetzt.

Es gibt Rundzellen, Flachzellen oder prismatische Zellen, die so hergestellt werden. Die Schichtabfolge ist dabei immer gleich, auf der einen Seite der positive Pol oder die positive Kontaktierung darauf die Kathode, darauf ein Separator und darauf die negative Elektrode, die Anode, beispielsweise auch in Form des Gehäuses oder eines eigenen Pols. Der Aufbau ist in der Fachwelt bekannt und kann je nach Batterie- respektive Akkutyp, wie z.B. Lithium-Ionen, Lithium-Polymer-Typ und Anwendung, variieren.

Bei hohen Leistungsdichten, beispielsweise beim Aufladen des Akkus, erwärmt sich die Zelle. Dabei dehnen sich die Materialien aus und der Innendruck in der Zelle steigt an. Abgesehen davon dreht sich durch Einlagerung von Ionen die hierfür vorgesehene Elektrode aus.

Insbesondere genannt seien in diesem Zusammenhang die Lithium-Ionen-Akkuzellen, bei denen die Graphit-Anode beim Laden Lithium-Ionen aufnimmt und sich ausdehnt. Beim Entladen verlassen die Ionen die Anode und sie schrumpft wieder. Die Volumenänderung liegt dabei bei beispielsweise 5% bis 20%, insbesondere beispielsweise bei 10%.

Silizium-Anoden, die in Entwicklung sind und/oder in speziellen "high-End"-Akkuzellen, beispielsweise mit Kathoden-Materialien, wie NMC, LFP, zu finden sind, gibt es, weil Silizium sehr viele Lithium-Ionen aufnehmen kann, Volumenänderungen von bis zu 300%.

Die verschiedenen Ausdehnungen und Schrumpfungen führen zu mechanischem Stress, der die Lebensdauer der Akkuzelle verkürzt. Daher besteht der Bedarf eines Monitoring des Akkuzellen-Innendrucks.

Die starke Ausdehnung von Silizium Anoden und/oder von Siliziumhaltigen Anoden verhindert bislang deren Einsatz in Akkus, obwohl diese deutlich höhere Energiespeicherfähigkeiten erzeugen würden, da bei dieser Ausdehnung unter anderem der Innendruck im Akkugehäuse stark ansteigt.

Aufgabe der vorliegenden Erfindung ist es, eine Akkuzelle zur Verfügung zu stellen, bei der eine Änderung des Innendrucks von außen erkennbar ist.

Diese Aufgabe wird durch den Gegenstand der vorliegenden Erfindung, wie er in der Beschreibung, den Figuren und den Ansprüchen offenbart ist, gelöst.

Dementsprechend ist Lösung der Aufgabe und Gegenstand der Erfindung eine gewickelte und/oder gestapelte Akkuzelle, eine Kathode, einen Separator und eine Anode in Form einer Wicklung und/oder eines Stapels, umgeben von einem Elektrolyten, in einem Gehäuse umfassend, wobei in einer Windung der Wicklung und/oder auf einer Lage im Stapel ein Folien-Drucksensor mit zumindest einem Folien-Kondensator mit einer dielektrischen komprimierbaren Kondensator-Zwischenschicht und folgendem Aufbau vorgesehen ist:
- mindestens eine Folien-Kondensator-Platte, die mit einem Pol der Akkuzelle elektrisch verbunden ist und die mit einem weiteren Bauelement der Akkuzelle, wie dem Gehäuse, als zweiter Kondensator-Platte einen Kondensator bildet,
- oder zwei Folien-Kondensator-Platten, die mit den beiden Elektroden der Akkuzelle elektrisch leitend verbunden sind,
- wobei sich die Dicke der dielektrischen komprimierbaren Kondensator-Zwischenschicht des zumindest einen Folien-Kondensators sich in Abhängigkeit vom Innendruck in der Akkuzelle ändert, und
- wobei die metallisierten Bauelemente des Folien-Kondensators verkapselt, also ohne direkten Kontakt zum Elektrolyten der Akkuzelle, vorliegen.

Allgemeine Erkenntnis der Erfindung ist, dass ein Aufbau mit zumindest einem Folien-Kondensator, der an die Elektroden des Akkus angeschlossen ist und dessen Platten aus einer oder zwei leitfähigen Fläche(n) durch ein komprimierbares Dielektrikum, wie beispielsweise einen Gummi, oder durch einen Abstand bei koplanarer Ausführung voneinander oder von einem "kapazitiven Koppelelement" oder von einer zusätzlichen leitfähigen Fläche getrennt sind, verkapselt vorliegend in einer Akkuzelle mit der entsprechenden Drucktechnik herstellbar ist und einen flächigen, damit die Akkuzelle nicht belastenden, Innendruck-Sensor für die Akkuzelle ergibt.

Ändert sich der Innendruck in der Wicklung, dann werden die Folien-Kondensator-Platten entweder näher aneinander gedrückt oder weiter auseinandergezogen und damit ändert sich auch die Kapazität eines Folien-Kondensators der den Folien-Drucksensor bildet. Durch Kontaktierung des Folien-Kondensators mit den Elektroden des Akkus wird die Änderung der Folien-Kondensator-Kapazität zusammen mit dem Batterie-System-Management "BMS" auslesbar.

Eine Wicklung hat eine Anzahl von Windungen um einen Kern herum. In einer Akkuzelle bildet beispielsweise der kontaktierte positive Pol den Kern der Wicklung um den herum die Kathode, der Separator und die Anode in mehreren Windungen gewickelt sind. Diese Wicklung wird zur Herstellung der Akkuzelle zusammen mit dem Elektrolyten in ein Gehäuse eingebracht und verschlossen.

Nach einer beispielhaften Ausführungsform der Erfindung wird ein flächige Folien-Drucksensor auf einer Windung der Wicklung aufgebracht, wobei insbesondere eine Anordnung auf einer äußeren, an die Gehäuse-Innenwand angrenzenden Windung vorteilhaft ist.

Grundsätzlich hat der Folien-Drucksensor zumindest einen Folien-Kondensator mit einem folgenden Aufbau: Substrat, auf der einen Seite mit einer optionalen Klebeschicht zur Befestigung auf einer Windung des Akkus, auf der anderen Seite des Substrats dann der Folien-Kondensator-Aufbau mit den metallisierten Platten, die über ein Dielektrikum voneinander beabstandet sind.

Dabei ist es möglich, den Folien-Drucksensor auf einer Windung der Kathode aufzubringen, genauso kann er auf jeder anderen Windung angeordnet sein, solange die Kontaktierung zum +(plus)Pol gewährleistet ist.

Der optional aufgebrachte Kleber ist beispielsweise ein transparenter Kleber wie ein OCA Kleber, wobei "OCA" für "optical clear adhesive" steht. Beispielsweise sind solche Kleber Acrylat-haltig. Die Auftragung des Klebers kann auf der Unterseite des Substrats vollflächig oder teilflächig erfolgen.

Bevorzugt erfolgt die Aufbringung der Klebeschicht auf der unteren Substrat-Seite möglichst dünn in einer Schichtdicke im Bereich von 1µm bis 150µm, insbesondere im Bereich von 10µm bis 130µm.

Das Substrat liegt beispielsweise in Form einer Folie, wie einer Kunststofffolie wie beispielsweise aus den Kunststoffen PET, PP, oder PE, vor. Auch hier ist eine möglichst geringe Schichtdicke erstrebenswert, beispielsweise liegt die Dicke der Substratschicht im Bereich von 1µm bis 50µm, insbesondere von 5µm bis 25 µm, beispielsweise um die 10µm.

Auf dem Substrat befindet sich - auf der, der optionalen Klebeschicht gegenüberliegenden Seite - eine leitfähige Platte beispielsweise aus Silber, Kupfer, PEDOT und/oder elektrisch leitfähige Funktionsschicht wie "Metalmesh^{®}" von PolylC^{®} die die erste Folien-Kondensator-Platte darstellt. Diese Kondensator-Platte ist elektrisch leitend mit dem +(Plus)Pol der Akkuzelle verbunden, also an die Kathode galvanisch angeschlossen.

Auf dieser elektrisch leitfähigen Folien-Kondensator-Platte befindet sich eine komprimierbare dielektrische Schicht, beispielsweise eine Elastomer oder Gummischicht aus elastomerem Kunststoff wie beispielsweise Polyurethan.

Im Fall des Folien-Kondensators mit zwei leitfähigen Platten, wie oben als weitere Möglichkeit einer beispielhaften Ausführungsform der Erfindung - beispielsweise wenn ein Kunststoff-Gehäuse der Akkuzelle vorliegt - beschrieben, liegt darauf dann die zweite elektrisch leitfähige Folien-Kondensator-Platte mit der Kontaktierung zu dem -(Minus)Pol der Akkuzelle.

Die Anbringung des Folien-Kondensators als Drucksensor erfolgt auf einer äußeren Windung in Verbindung mit der unteren Windung, so dass durch eine Druckänderung und/oder eine thermische Ausdehnung der Windungen in der Wicklung innerhalb der Akkuzelle der Folienkondensator zusammengedrückt und/oder an die Gehäusewand gedrückt oder eben auseinandergezogen wird. Dadurch verändert sich der Abstand zwischen den Folien-Kondensator-Platten und die Dicke der elastischen Dielektrikums-Schicht und damit die Kapazität des Folien-Kondensators. Durch die Verbindung zu den Polen der Akkuzelle ist diese Änderung der Kapazität durch das Batterie-Management-System erkennbar und auslesbar.

Nach einer beispielhaften Ausführungsform der Erfindung umfasst der Folien-Drucksensor zwei Folien-Kondensatoren mit zwei Anschlüssen, die mit den beiden verschiedenen Polen der Akkuzelle galvanisch leitend verbunden sind.

Nach einer beispielhaften Ausführungsform der Erfindung umfasst einer der Folien-Kondensatoren des Folien-Drucksensors einen Vorwiderstand. Dieser dient insbesondere dazu, dass die Umladefähigkeit des Kondensators auf eine bestimmte Maximal-Frequenz gelegt wird. Damit ergibt sich ein bestimmter kapazitiver Verlauf bezüglich der Umlade- und/oder Messfrequenz, bei welchen bestimmten Kapazitäten nicht mehr zur Gesamtkapazität beitragen.

Nach einer beispielhaften Ausführungsform der Erfindung umfasst der Folien-Drucksensor eine Induktivität, beispielsweise eine Spule, insbesondere eine Flachspule, die zusammen mit der Drucksensorkapazität einen Schwingkreis bildet, dessen nominale Resonanz-Frequenz über die Dimensionierung von Induktivität und Kapazität einstellbar ist. Die dadurch entstehende Resonanzerscheinung der Akku-Gesamt-Impedanz wird durch die durch Änderung des Akkuzellen-Innendrucks erfolgte Kapazitätsänderung des oder der Folien-Kondensatoren, die den Folien-Drucksensor bilden, im Frequenzspektrum verschoben. Diese Frequenzverschiebung lässt sich über ein entsprechend angepasstes BMS auslesen und erkennen.

Ein Folien-Drucksensor ersetzt nach einer beispielhaften Ausführungsform der Erfindung den Klebestreifen am Ende der Wicklung.

Nach einer beispielhaften Ausführungsform des Folien-Drucksensors ist zumindest einer der Folien-Kondensatoren, die den Folien-Drucksensor bilden, mit dem Gehäuse, beispielsweise als Anode, verbunden.

Nach einer beispielhaften Ausführungsform des Folien-Drucksensors ist zumindest einer der elektrischen Kontakte eines Folien-Kondensators eine galvanische elektrische Leitung.

Nach einer beispielhaften Ausführungsform des Folien-Drucksensors ist zumindest einer der elektrischen Kontakte eines Folien-Kondensators eine nicht galvanisch verbundene "floating" elektrische Leitung.

Im Folgenden wird die Erfindung noch anhand von Figuren näher erläutert:
Figur 1 zeigt eine einfache Ausführungsform mit Anschlussmöglichkeit einer Kondensatorplatte an einen Pol der Akkuzelle von oben.
Figur 2 zeigt eine einfache Ausführungsform mit Anschluss der einen Kondensatorplatte an einen Pol der Akkuzelle in der Seitenansicht.
Figur 3 zeigt eine Ausführungsform des Folien-Drucksensors mit einem Vorwiderstand
Figur 4 zeigt ein Verfahren zur Herstellung einer Akkuzelle mit integriertem Drucksensor
Figur 5 zeigt einen Folien-Drucksensor, der zwei Kondensatoren, die an verschiedenen Polen der Akkuzelle angeschlossen sind.
Figur 6 zeigt eine beispielhafte Ausführungsform des Folien-Drucksensors mit Induktivität.
Figur 7 zeigt das Schaltungs-Schema und die Grafik zur Änderung einer sich verschiebenden Schwingkreisresonanzfrequenz bei Änderung des Akkuzellen-Innendrucks.
Figur 8 zeigt beispielhafte Kondensator-Konstellationen verschiedener Ausführungsformen des Folien-Kondensators.
Figur 9 zeigt eine weitere beispielhafte Ausführungsform des Folien-Drucksensors mit Induktivität.

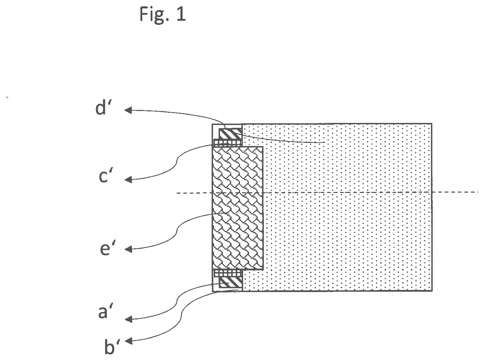

In Figur 1 ist der Folien-Drucksensor wie er in die Wicklung einer Akkuzelle eingebaut wird, von oben zu sehen. Zu erkennen ist das Substrat b' beispielsweise eine Kunststofffolie. Auf dem Substrat b' befinden sich die metallisierte kapazitive Platte c' und die anisotrope oder isotrope leitfähige Kontaktier- und/oder Klebe-Schicht e' sowie das elastische und/oder komprimierbare Dielektrikum d', das den variablen Abstand zur zweiten Kondensatorplatte oder zum kapazitiven Koppelelement, wie z.B. dem metallischen Gehäuse bei mutual koplanarer Variante.

Auf der anderen Seite des Substrats b' befindet sich optional eine Klebeschicht a', die in der Fläche variabel ist und zur Fixierung des Folien-Drucksensors auf beispielsweise einer Windung der Wicklung dient.

Das Dielektrikum d' ist komprimierbar und wird - beispielsweise beim schnellen Aufladen der Akkuzelle - durch eine Erhöhung des Innendrucks in der Akkuzelle, gemeinsam mit der Wicklung zusammengedrückt und/oder gegen die Gehäusewand gedrückt, wodurch eine Änderung der Kondensatorkapazität bewirkt wird, die ihrerseits messbar ist.

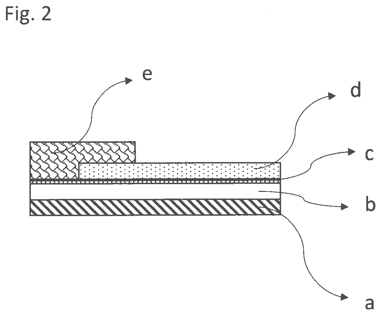

Figur 2 zeigt prinzipiell die gleiche Ausführungsform der Erfindung, nur in der Seitenansicht. Dabei stellt a eine optionale Klebeschicht dar, die den Folien-Drucksensor mit der Wicklung der Akkuzelle verbindet. Die darauf liegende Schicht ist das Substrat b, auf dem die leitfähige Schicht c liegt, die beispielsweise mit dem +Pol, der Kathode in der Akkuzelle verbunden ist. Auf der Schicht c liegt das elastische Dielektrikum d, das nach oben hin von der elektrischen Kontaktierungsschicht e bei dieser beispielhaften Ausführungsform der Erfindung zum Teil abgedeckt wird. Diese Abdeckung entfällt beispielsweise bei anderen beispielhaften Ausführungsformen der Erfindung. Die Schicht des Dielektrikums d hat beispielsweise eine Dicke von bis zu 30µm, beispielsweise liegt sie im Bereich von 10µm bis 25 µm.

Beispielsweise ist die komprimierbare dielektrische Schicht d um den Faktor 2 komprimierbar, so dass die Kapazitätsänderung des Kondensators des Folien-Drucksensors der Annäherung der beiden Kondensator-Platten um einen Faktor 2 entspricht.

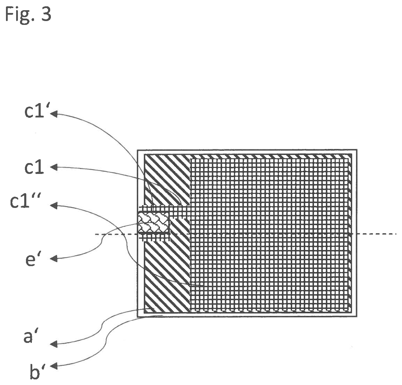

Figur 3 zeigt eine Ausführungsform mit einem Vorwiderstand, dieser kann durch eine beliebige Leitung mit definiertem Widerstand hergestellt werden. Dieser Vorwiderstand kann entweder aus dem gleichen Material wie die leitfähige Folien-Kondensator-Platte sein und/oder durch ein Elektroden-Layout in Länge, Dicke und/oder Breite so variieren, dass der Wert des Vorwiderstands in gewissen Bereichen z.B. von 1Ohm bis 10kOhm angepasst werden kann.

Nach einer weiteren beispielhaften Ausführungsform der Erfindung ist der Vorwiderstand aus einem anderen Material, das ebenfalls in Breite, Länge und/oder Dicke anpassbar ist, so dass ein gewünschter Vorwiderstand einstellbar ist.

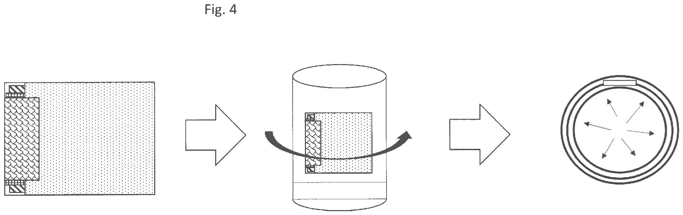

Figur 4 zeigt den Vorgang eines beispielhaften Einbaus eines Folien-Drucksensors in eine Ausführungsform einer Akkuzelle gemäß der Erfindung.

Die hier gezeigte beispielhafte Ausführungsform ist eine Wickel-Akkuzelle. Dabei wird um einen zylindrischen mittig angeordneten +Pol eine leitfähige Metalloxidenthaltende Schicht, die die Kathode bildet, gewickelt, darum eine SeparatorSchicht zur Trennung des Kathoden- und Anodenraums und schließlich eine weitere, leitfähige metallisierte Schicht, die die Anode bildet. Im Zwischenraum der Wicklung befindet sich der Elektrolyt. Die äußerste Lage der Wicklung grenzt fast an das zylindrische Gehäuse an. In diese äußerte Wicklung wird nach der vorliegend in Figur 4 gezeigten Ausführungsform der Folien-Drucksensor - wie beispielsweise in Figur 1 gezeigt - eingebaut. Beispielsweise kann der optional am Substrat b' haftende Kleber a' aus Figur 1 hier bei der äußersten Wicklung einen Klebestreifen, der das Ende der gewickelten Anode herkömmlich fixiert, ersetzen. Dabei ist beispielsweise der Folien-Drucksensor wie ein Stück Klebefolie als Mittel zur Fixierung der äußersten Wicklung an der darunterliegenden Lage angeordnet. Bei der Änderung des Innendrucks der Akkuzelle, wie beispielsweise beim schnellen Aufladen und der damit einhergehenden Erwärmung der Akkuzelle, ändert sich der Abstand des Folien-Drucksensors zur Gehäuse-Außenwand und damit die Kapazität(en) des oder der Folien-Kondensatoren des Folien-Drucksensors. Durch die Kontaktierung mit dem +Pol der Akkuzelle kann diese Kapazitätsänderung über die Akkuzelle ausgelesen werden.

Der Innendruck und die Änderungen des Innendrucks einer Akkuzelle sind durch verschiedene Faktoren wie Temperatur, Ladezustand beeinflusst. Die Messung der Änderung des Innendrucks einer Akkuzelle liefert beispielsweise wichtige Indizien bezüglich der Rest-Laufzeit der Akkuzelle, den Energieinhalt der Akkuzelle und vor allem die Belastung des Gehäuses der Akkuzelle durch den Innendruck. Bei der Herstellung der Akkuzelle wird nach dem Einsetzen der Wicklung in das Gehäuse noch der Elektrolyt zugegeben, bevor die Akkuzelle verschlossen wird. Danach ist eine Messung des Innendrucks bisher nicht möglich. Andererseits übt eine thermisch bedingte Ausdehnung der Folien der Folien-Wicklung in der Akkuzelle Druck innerhalb der Wicklung und letztlich auch auf das Gehäuse aus. Eine Messung des Innendrucks kann daher dem Nutzer der Akkuzelle wichtige Informationen liefern, die bislang unzugänglich sind.

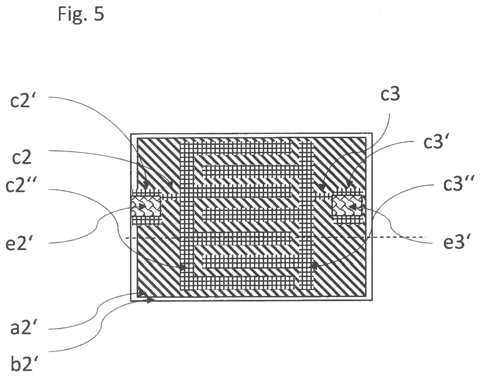

Figur 5 zeigt einen Folien-Drucksensor, der zwei Folien-Kondensatoren umfasst, wobei die Folien-Kondensatoren zueinander interdigital angeordnet sind. Die beiden Folien-Kondensator-Platten sind an jeweils verschiedenen Polen der Akkuzelle angeschlossen.

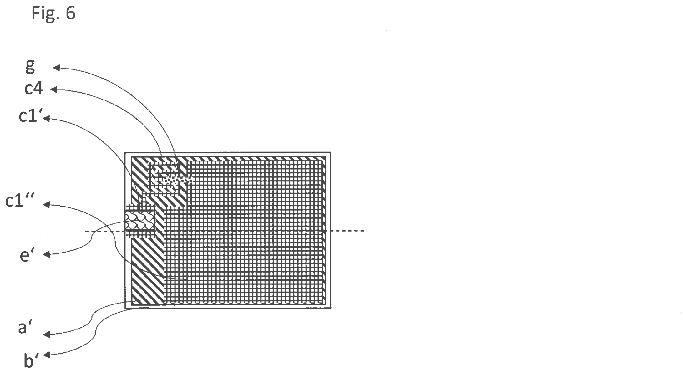

Figur 6 zeigt eine beispielhafte Ausführungsform mit einer Induktivität, diese kann durch eine beliebige Leitung mit definierter Geometrie hergestellt werden. Diese Induktivität ist hier bei dem dargestellten Ausführungsbeispiel der Erfindung als flache Schneckenspule c4 ausgeführt. Diese Schneckenspule c4 ist über eine Brücke g mit der Folien-Kondensator-Platte verbunden. Beispielsweise ist die Schneckenspule c4 aus dem gleichen Material wie der Rest der Folien-Kondensator-Platte.

Beispielhafte weitere Ausführungsformen der Erfindung haben beispielsweise keine Brücke und/oder die Spule ist keine Schneckenspule, und/oder aus einem anderen Material als der Rest der Folien-Kondensator-Platte.

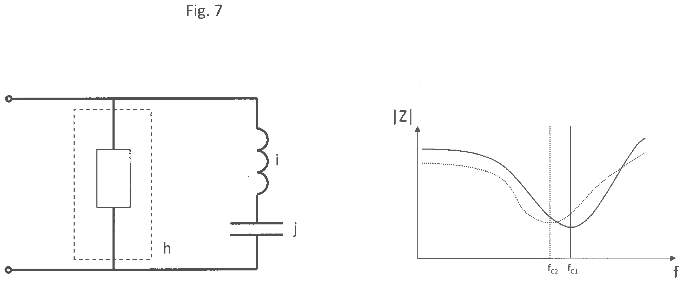

Figur 7 zeigt links den schematischen Aufbau der Schaltung aus Batterieimpedanz "**h**" und dem Schwingkreis aus Induktivität "**i**" und Kapazität "**j**".

Auf der rechten Seite der Figur 7 sind die resultierenden Frequenzverläufe der Schaltungs-Impedanz gezeigt. Zu erkennen ist die Änderung der Kapazität **j** und die sich verschiebende Schwingkreisresonanzfrequenz von **fc1** nach **fc2.**

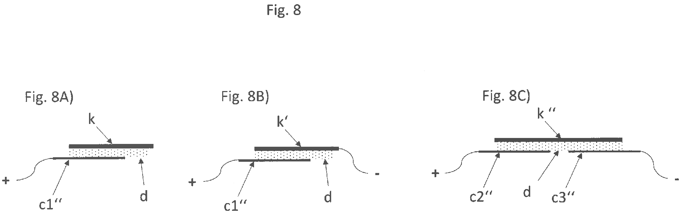

Figur 8 umfasst die beispielhaften Kondensatorkonstellationen 8A), 8B) und 8C), die jeweils Folien-Kondensatoren zeigen, bei denen die Gehäusewand **k, k'** und **k"** der Akkuzelle als kapazitives Koppelelement fungiert. Dabei zeigt 8A) eine Folien-Kondensator-Platte **c1"**, die mit dem +Pol verbunden ist und über das verformbare Dielektrikum **d** mit der "floatenden", also nicht mit einem definierten Potential galvanisch verbundenen Gehäusewand **k** einen

Kondensator mit Kapazität **j,** die sich je nach Abstand zur Gehäusewand ändert, bildet. Diese "Einzelplatte" lässt sich beispielsweise mit dem Self-cap-Prinzip auslesen.

8B) zeigt eine einzelne Folien-Kondensator-Platte **c1",** die über das verformbare Dielektrikum **d** mit der Gehäusewand **k',** die mit dem -Pol verbunden ist, einen Folien-Kondensator bildet.

8C) zeigt zwei Folien-Kondensator-Platten **c2** und **c3,** die jeweils an den +Pol und an den -Pol angeschlossen sind und über das verformbare Dielektrikum **d** mit der Gehäusewand **k",** die als "kapazitives Koppelelement" fungiert, gekoppelt sind.

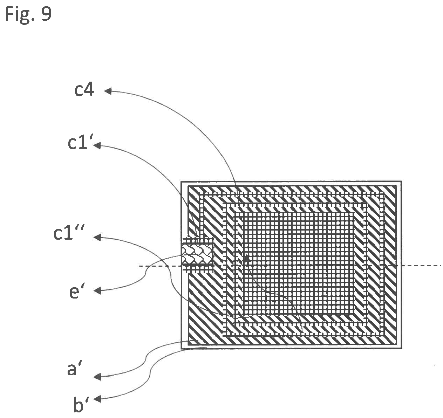

Figur 9 zeigt eine beispielhafte Ausführungsform mit einer Induktivität, diese kann durch eine beliebige Leitung mit definierter Geometrie hergestellt werden. Diese Induktivität ist hier bei dem dargestellten Ausführungsbeispiel der Erfindung als flache Schneckenspule c4 ausgeführt. Diese Schneckenspule c4 ist hier umlaufend um die Folien-Kondensator-Platte verbunden. Beispielsweise ist die Schneckenspule c4 aus dem gleichen Material wie der Rest der Folien-Kondensator-Platte.

Beispielsweise ist das Gehäuse der Akkuzelle an keinem der Pole angeschlossen ist und/oder es handelt sich um Rundzellen, bei denen - entgegen der üblichen Bauweise - der andere Pol nicht mit dem Gehäuse verbunden wird. Dann ist beispielsweise die eine Platte des Folien-Drucksensors an einem der Pole angeschlossen und das - oder die Gehäuse oder auch alle Gehäuse zusammen - bei Zusammengeschalteten mehreren Akkuzellen - auf die Gegenkapazität, beispielsweise in Form vom Messground, gelegt. Dies ist besonders vorteilhaft, weil die Akkuzellen- Gehäuse von außen leicht kontaktierbar sind. Der nicht verwendete Pol des Akkus bleibt unverändert. In dem Fall ist das Auslesen der Akkuzelle und deren Innendruck respektive der Änderungen daran komplett von der Messeelektronik abtrennbar, wobei das Messergebnis bezüglich des Innendrucks klar erkennbar ist.

Die Erfindung löst das Problem, dass eine Akkuzelle, einmal hergestellt, als "Blackbox" zu akzeptieren ist, weil man, ohne die Akkuzelle zu zerstören, keine Veränderungen in der Akkuzelle messen kann. Andererseits ist sowohl die Abschätzung der verbleibenden Lebensdauer und/oder die Innentemperatur über die Messung der Änderung des Innendrucks einer Akkuzelle abschätzbar. Hinzu kommt, dass der Ladezustand und/oder der Energieinhalt indirekt über die Messung des Innendrucks abschätzbar sind.

Durch die vorliegende Erfindung wird es erstmals möglich, den Innendruck einer Akkuzelle zu messen, wobei ein Drucksensor eingesetzt wird, der so einfach wie ein Stück Klebestreifen in die Windungen der Akkuwicklung einsetzbar ist und durch den ein Auslesen der Druckänderung in der Akkuzelle in Echtzeit - beispielsweise - über das Batterie-Managment-System "BMS" möglich ist.

## Patentansprüche

1. Gewickelte und/oder gestapelte Akkuzelle, eine Kathode, einen Separator und eine Anode in Form einer Wicklung und/oder eines Stapels, umgeben von einem Elektrolyten, in einem Gehäuse umfassend, wobei in einer Windung der Wicklung und/oder auf einer Lage im Stapel ein Folien-Drucksensor mit zumindest einem Folien-Kondensator mit einer dielektrischen komprimierbaren Kondensator-Zwischenschicht und folgendem Aufbau vorgesehen ist:
- mindestens eine Folien-Kondensator-Platte, die mit einem Pol der Akkuzelle elektrisch verbunden ist und die mit einem weiteren Bauelement der Akkuzelle, wie dem Gehäuse, als zweiter Kondensator-Platte einen Kondensator bildet,
- oder zwei Folien-Kondensator-Platten, die mit den beiden Elektroden der Akkuzelle elektrisch leitend verbunden sind,
- wobei sich die Dicke der dielektrischen komprimierbaren Kondensator-Zwischenschicht des zumindest einen Folien-Kondensators sich in Abhängigkeit vom Innendruck in der Akkuzelle ändert, und
- wobei die metallisierten Bauelemente des Folien-Kondensators verkapselt, also ohne direkten Kontakt zum Elektrolyten der Akkuzelle, vorliegen.

2. Akkuzelle nach Anspruch 1,
bei der der Folien-Drucksensor auf einer äußeren Windung der Wicklung angeordnet ist.

3. Akkuzelle nach einem der vorhergehenden Ansprüche 1 oder 2, der auf der vom Folienkondensator abgewandten Substrat-Seite einen Klebstoff hat.

4. Akkuzelle nach Anspruch 3,
wobei der Kleber ein transparenter Kleber ist.

5. Akkuzelle nach einem der Ansprüche 3 oder 4,
bei dem die Auftragung des Klebers vollflächig auf der Unterseite des Substrats vorgesehen ist.

6. Akkuzelle nach einem der Ansprüche 3 oder 4,
bei dem die Auftragung des Klebers teilweise auf der Unterseite des Substrats vorgesehen ist.

7. Akkuzelle nach einem der vorhergehenden Ansprüche,
bei dem der Folien-Drucksensor auf der äußersten Windung in Kontakt mit dem Gehäuse angeordnet ist.

8. Akkuzelle nach einem der vorhergehenden Ansprüche,
bei dem beide Kondensatorplatten des Folien-Kondensators des Folien-Drucksensors mit den Polen der Akkuzelle galvanisch verbunden sind.

9. Akkuzelle nach einem der vorhergehenden Ansprüche,
bei dem eine Kondensatorplatte des Folien-Kondensators des Folien-Drucksensors mit einem Pol der Akkuzelle galvanisch verbunden ist.

10. Akkuzelle nach einem der vorhergehenden Ansprüche,
bei dem der Folien-Kondensator auf zumindest einer Kondensator-Platte einen Vorwiderstand umfasst.

11. Akkuzelle nach einem der vorhergehenden Ansprüche,
bei der der Folien-Drucksensor zumindest eine Induktivität umfasst.
